# EUROPÄISCHE PATENTSCHRIFT

(11) **EP 1 366 981 B1**
(45) Veröffentlichungstag und Bekanntmachung des Hinweises auf die Patenterteilung: **06.01.2010**
(21) Anmeldenummer: 03010634.8
(22) Anmeldetag: 13.05.2003
(51) Int. Cl.: B62M 25/04

(54) **Freigabemechanismus für Triggerschalter**
Release mechanism for gear change
Dispositif de déblocage pour changement de vitesse

(30) Priorität: 31.05.2002 DE 10224196
(43) Veröffentlichungstag der Anmeldung: 03.12.2003
(73) Patentinhaber: SRAM Deutschland GmbH, 97404 Schweinfurt (DE)
(72) Erfinder: Wessel, Robert, 93059 Regensburg (DE); Weiss, Martin, 97424 Schweinfurt (DE)

(56) Entgegenhaltungen:
- EP-A- 1 334 903
- EP-A2- 0 785 128
- EP-A2- 1 024 079
- EP-A2- 1 118 534
- FR-A1- 2 701 917
- US-A1- 2001 042 421

## Beschreibung

Die vorliegende Erfindung betrifft einen Schaltmechanismus für einen Schrittschalters mit einer Aufzieh-, Halte- und Freigabemechanik, insbesondere eine Seileinzugs- und Positioniereinrichtung zum Aufziehen, Halten und Freigeben des Seilzuges nach dem Oberbegriff des Hauptanspruches. Diese Seileinzug- und Positioniereinrichtung findet ihre Anwendung in Triggerschaltern, z. B. in Hebel- oder Drehgriffschaltern zur Betätigung von Gangschaltungen an Fahrrädern.

Schrittschalter werden zum Aufwickeln und Freigeben des federvorgespannten Schaltzuges verwendet und kehren nach ihrer Betätigung wieder in ihre Ausgangslage zurück. Schritt- bzw. Triggerschalter sind aus den Patentschriften EP 0 361 335 B1 und DE 198 09 113 A1 bekannt.

Die gezeigten Schalter beinhalten jeweils zwei Schalthebel, einen zum Aufziehen bzw. Aufwickeln des Schaltzuges und einen zum Lösen der Positionier- und Halteeinrichtung bzw. zum Freigeben des federvorgespannten Schaltzuges. Der Aufziehhebel verdreht die Aufwickelspule über eine in Eingriffsrichtung vorgespannte Klinke, die in eine Transportverzahnung eingreift. Die Aufwickelspule wird von einer auf den Schaltzug wirkenden Rückstellfeder in Abwickelrichtung vorgespannt. Die Positioniereinrichtung hält in der nicht geöffneten Stellung stets die Aufwickelspule in der momentanen Schaltposition fest und wirkt somit der Rückstellkraft am Schaltzug entgegen.

Die Positioniereinrichtung in der EP 0 361 335 B1 besteht aus einer, mit der Seilspule drehfest verbundenen und mit Zahnsegmenten bestückten Rastscheibe, in die wechselweise ein erstes oder zweites Sperrelement eingreift. Über einen Freigabehebel kann zum Abwickeln des Schaltzuges die Positionierwirkung der Halteklinke aufgehoben werden. Der Abwickelvorgang erfolgt dabei in zwei Etappen. Hierbei wird das gerade im Eingriff befindliche Sperrelement aus der Rastscheibe ausgeklinkt. Die Rastscheibe verdreht sich mit der Seilspule bis zum Eingriff des zweiten Sperrelementes in die Rastverzahnung. Kehrt der Freigabehebel wieder in die Ausgangsstellung zurück, so wird das zweite Sperrelement aus der Verzahnung bewegt und die Rastscheibe kann sich bis zum erneuten Eingriff des ersten Sperrelementes weiter drehen.

Die in der DE 198 09 113 A1 gezeigte Positioniereinrichtung besteht aus einer, mit der Seilspule drehfest verbundenen ersten und zweiten Rastscheibe, in die jeweils die erste bzw. zweite Rastnase des Freigabehebels eingreift. Bei Betätigung des Freigabehebels kann zum Abwickeln des Schaltzuges die Positionierwirkung aufgehoben werden. Der Abwickelvorgang erfolgt dabei ebenfalls in zwei Etappen. Hierbei wird die gerade im Eingriff befindliche erste Rastnase aus dem Rastzahnsegment der ersten Rastscheibe ausgeklinkt und die zweite Rastnase taucht in das Rastzahnsegment der zweiten Rastscheibe ein. Die erste und zweite Rastscheibe verdreht sich mit der Seilspule bis die zweite Rastnase am entsprechenden Haltezahn der zweiten Rastscheibe anliegt. Kehrt der Freigabehebel wieder in die Ausgangsstellung zurück, so wird die zweite Rastnase aus der Verzahnung an der zweiten Rastscheibe heraus bewegt, die Seilspule kann sich somit bis zum erneuten Anlegen der ersten Rastnase an den entsprechenden Haltezahn der ersten Rastscheibe weiter drehen. Beide Schalthebel werden nach der Betätigung von einer Rückstellfeder in ihre Ausgangsstellung zurück gebracht, dabei ratscht die federvorgespannte Klinke über die Sägezahnkontur des für den Aufziehvorgang an der zweiten Rastscheibe vorgesehenen Zahnsegmentes.

Wie in den beiden Schalterausführungen gezeigt, werden zur Realisierung eines getriggerten Schaltvorganges drei Zahnsegmente mit Außenverzahnung benötigt. Ein Zahnsegment kommt beim Aufziehvorgang zum Einsatz und zwei Zahnsegmente sind für den Halte- und den in zwei Schritten ablaufenden Freigabevorgang erforderlich. Da am Umfang einer Zahnscheibe aufgrund der vielen Gangstufen, nur zwei Zahnsegmente angeordnet werden können, wird ein weiteres Scheibenelement für das dritte Zahnsegment benötigt.

Zur Realisierung der Aufzieh- und Freigabefunktion werden viele Bauteile wie z. B. Schalthebel mit Rückstellfeder, Aufwickelspule mit Transport- und Rastzahnkonturen, Positioniereinrichtung mit Sperrklinken und Vorspannfedern sowie ein Freigabehebel mit Rückstellfeder benötigt. Diese Vielzahl von genau aufeinander abgestimmten Bauteilen erfordern einen erheblichen Herstellungs- und Montageaufwand sowie einen entsprechenden Bauraum im Schaltergehäuse. Diese Bauteile sind im Hinblick auf eine hohe Lebensdauer stabil auszuführen, was sich besonders auf Gewicht und Kosten der Schaltereinheit auswirkt. Ein Schalter entsprechend dem Oberbegriff von Anspruch 1 ist in Dokument FR 2 701 917 gezeigt.

Aufgabe der Erfindung ist es, einen Schalter ohne Beeinträchtigung der Gesamtfunktion so zu vereinfachen, dass sich die Anzahl der benötigten Bauteile insbesondere die der Aufzieh-, Halte- und Freigabeeinrichtung verringern und sich somit Fertigungs- und Montageaufwand sowie Gewicht und Bauraum des Schalters reduzieren.

Die Lösung dieser Aufgabe wird, gemäß den kennzeichnenden Merkmalen der Patentansprüche, im wesentlichen durch die Einsparung des zur Bereitstellung des dritten Zahnsegmentes erforderlichen zweiten Scheibenelementes sowie der separaten Klinkenachse zur Lagerung der Aufziehklinke erzielt. Dabei wird das benötigte dritte Zahnsegment, innerhalb der bereits am Umfang des Scheibenelementes befindlichen zwei Zahnsegmente, am ersten Scheibenelement angeordnet, des weiteren bildet die Klinkenachse mit der Aufziehklinke ein gemeinsames Bauteil.

Der vorgeschlagene Schalter benötigt gegenüber den in den vorgenannten Schutzrechten vorgestellten Schaltern kein zusätzliches zweites Scheibenelement, sondern lediglich einen Durchbruch mit der Kontur des dritten Zahnsegmentes. Das Scheibenelement hat folglich am Umfang zwei Zahnsegmente und im Innenbereich ein weiteres Zahnsegment. Das innenliegende Zahnsegment kann mit einer Innen- oder mit einer Außenverzahnung ausgestattet sein. Vorzugsweise wird jedoch eine Innenverzahnung gewählt, da sich hierbei ein größerer nutzbarer Zahnkreisdurchmesser ergibt. Das innenliegende Zahnsegment kann entweder für den Aufzieh- oder für den Halte- bzw. Freigabevorgang genutzt werden. Durch die Zusammenfassung der Klinkenachse mit der Aufziehklinke zu einem Bauteil wird zum einen ein weiteres Bauteil eingespart und zum anderen kann dadurch das Bauteil recht schlank gestaltet werden, so dass es problemlos in die Aussparung für das Aufziehzahnsegment am Scheibenelement eingreifen kann.

Die Schaltmechanik des erfindungsgemäßen Schalters zum Betätigung einer Fahrradschaltung ist im wesentlichen um eine Trägerplatte und um eine zentrale Achse angeordnet und wird von einem Gehäuse sowie von einem Verkleidungselement abgedeckt. Am Verkleidungselement befindet sich das Gewinde für die Einstellschraube des Schaltzuges. Der Schalter wird mittels einer im Schaltergehäuse integrierten Lenkerklemme am Lenker positioniert. In dieser Lenkerklemme wird ein elastisches Anzeigeband, das von der Seilspule mittels einer Transportverzahnung verschoben wird, in den Sichtbereich des Fahrers geführt und dabei um mehr als 90° umgelenkt. Das Ganganzeigeband verläuft von der Seilspule zur Lenkerklemme und wird von einer durchsichtigen Abdeckung gegen Umwelteinflüsse geschützt. Zur Verbesserung der Ablesbarkeit ist die Anzeigeabdeckung insbesondere der Ablesebereich als Vergrößerungslinse ausgebildet. Das Anzeigeband ist seitlich mit einer Transportverzahnung ausgestattet und kämmt mit dieser Verzahnung an der Seilspule. Beim Verdrehen der Seilspule verschiebt sich das Anzeigeband und zeigt dann im Sichtfenster der Lenkerklemme die aktuelle Schaltstellung an.

Die Seilspule ist mit dem Scheibenelement drehfest verbunden, das mit drei Zahnsegmenten bestückt ist. Die Seilspule kann über das Scheibenelement in die gewünschte Gangstellung gedreht bzw. dort gehalten werden. Zwei Zahnsegmente befinden sich am Umfang des Scheibenelementes. Das dritte Zahnsegment ist in einem Durchbruch des Scheibenelementes angeordnet und hat somit einen kleineren Zahnkreisdurchmesser als die anderen beiden Zahnsegmente. Dieses Zahnsegment hat eine nach innen gerichtete Verzahnung, in deren Sägezähne die Aufziehklinke eingreift, um den Schaltzug schrittweise in Aufziehrichtung auf die Seilspule aufzuwickeln. Die Aufziehklinke ist im Betätigungselement gelagert und schwenkt um eine Klinkenachse, die annähernd senkrecht oder vorzugsweise parallel zur zentralen Seilspulenachse verläuft. Da der Betätigungshebel unter der Trägerplatte und das Scheibenelement mit dem Aufziehzahnsegment darüber angeordnet ist, muß die Aufziehklinke entweder um die Trägerplatte herum oder vorzugsweise durch die Trägerplatte hindurch greifen. Hierzu ist es vorteilhaft, wenn der Eingriffsbereich und der Lagerbereich der Aufziehklinke bei einer parallel zur Seilspulenachse verlaufenden Klinkenachse in Richtung der Schwenkachse räumlich versetzt angeordnet ist. Somit stützt sich die Aufziehklinke beim Aufziehvorgang mit seinem Lagerbereich im Betätigungselement ab und greift durch ein Fenster in der Trägerplatte hindurch, um mit seinem Eingriffsbereich über das Aufziehzahnsegment das Scheibenelement und damit die Seilspule in Aufziehrichtung zu verdrehen. Die um die Trägerplatte und einer zentralen Achse angeordneten Schaltkomponenten sowie der platzsparende Durchgriff der schlanken Aufziehklinke durch die Trägerplatte zum Eingriff in das innenliegende Aufziehzahnsegment, ermöglichen eine sehr kompakte Schalterausführung mit einer geringen Anzahl von Bauteilen.

In einer Minimalversion wird vorgeschlagen, ganz auf eine ausgeprägte Klinkenachse bzw. auf ein ausgebildetes Drehgelenk zu verzichten, so dass die Aufziehklinke nur um eine Kante oder um eine gerundete Kontur schwenkt und sich an einer geeigneten Gegenkontur im Betätigungselement abstützt.

Der Schaltvorgang wird durch Betätigung des Betätigungselementes eingeleitet, das sich gegen eine Rückstellfeder um die zentrale Achse drehen läßt. Mit dem Betätigungselement kann je nach Schwenkwinkel eine oder mehrere Schaltstufen weiter geschaltet werden. Wird das Betätigungselement wieder losgelassen, so kehrt es mit Federunterstützung wieder in die Ausgangslage zurück. Im Betätigungselement ist eine Seite der Achse der federvorgespannten Aufziehklinke gelagert. Die andere Lagerstelle wird von einer Zwischenplatte gebildet, die formschlüssig mit dem Betätigungselement verbunden ist. Nach erfolgtem Aufziehvorgang wird die Seilspule mittels einer ebenfalls federvorgespannten Halteklinke, die in ein Zahnsegment am Umfang des Scheibenelementes angreift, in der aktuellen Schaltstellung fixiert.

Beim Freigabevorgang wird das mit einer Rückstellfeder bestückte Freigabeelement betätigt. Das Freigabeelement in Form eines Freigabehebels ist in Richtung der zentralen Achse schwenkbar gelagert. Der Freigabehebel drückt bei Betätigung gegen das in Richtung Halteverzahnung vorgespannte und mit zwei festen Klinken bestückte Schiebeelement und befördert so die in Eingriff befindliche Halteklinke aus der Sägezahnkontur des ersten Zahnsegmentes am Umfang des Scheibenelementes heraus. Die zwei Klinken, eine Halte- und eine Sperrklinke, stehen sich gegenüber und sind fest mit dem das Scheibenelement umgreifende Schiebeelement verbunden bzw. bilden ein Bauteil. Die durch den Schaltzug vorgespannte Seilspule dreht sich nun soweit in Abwickelrichtung, bis die bereits in die Zahnkontur des zweiten Zahnsegmentes eingreifende Sperrklinke am nächsten Zahn anliegt und somit die Abwickelbewegung unterbricht. Wird der Freigabehebel wieder entlastet, so kann er in die Ausgangsposition zurückkehren, dabei wird auch das Schiebeelement in die Haltestellung zurück bewegt. Die Sperrklinke wird aus der Zahnkontur des zweiten Zahnsegmentes heraus bewegt und die Seilspule dreht sich weiter in Abwickelrichtung. Der zurückweichenden Sperrklinke folgt die Halteklinke und klinkt wieder in die Zahnkontur des ersten Zahnsegmentes ein. Durch Anlage der Halteklinke an den nächsten Sägezahn wird die Abwickelbewegung erneut gestoppt und damit die aktuelle Gangstellung fixiert.

### Kurzbeschreibung der Zeichnung

Anhand von Zeichnungen wird ein Ausführungsbeispiel zur weiteren Erläuterung der Erfindungsmerkmale gezeigt:
- Fig. 1: zeigt die Explosionsdarstellung eines Triggerschalters mit nur einem Scheibenelement, das mit drei Zahnsegmenten bestückt ist
- Fig. 2: zeigt die Komponenten der Freigabemechanik
- Fig. 3: zeigt das Verkleidungselement und die Aufziehmechanik
- Fig. 4: zeigt das Schaltergehäuse und die Komponenten der Ganganzeige

### Beschreibung des bevorzugten Ausführungsbeispieles

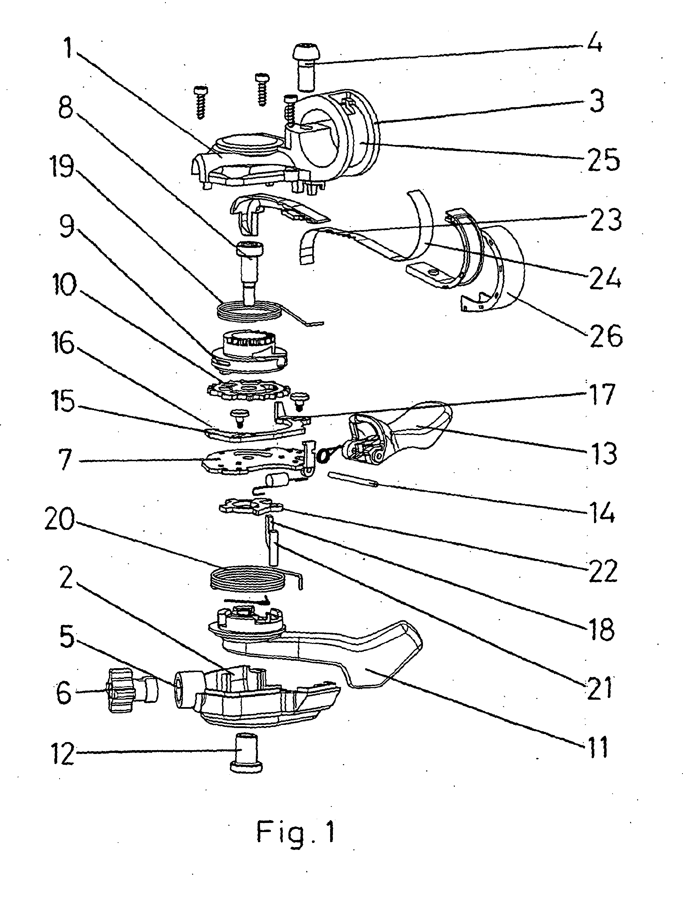

In Figur 1 werden in einer Explosionsdarstellung die wesentlichen Bauteile einer bevorzugten Ausführung eines Triggerschalters gezeigt.

Dieser Schalter setzt sich aus den Funktionsgruppen Freigabemechanik, Aufziehmechanik und Ganganzeige zusammen. Die Funktionsgruppen werden vom Schaltergehäuse 1 mit integrierter Lenkerklemme 3 und dem Verkleidungselement 2 umschlossen. Das Schaltergehäuse 1 wird mittels einer Lenkerbefestigung in Form einer Lenkerklemme 3 und einer Klemmschraube 4 am Lenker fixiert. Am Verkleidungselement 2 befindet sich ein Gewinde 5 zur Aufnahme der Einstellschraube 6, die zum Justieren des Schaltzuges benötigt wird. Das Verkleidungselement 2 wird inklusive Gewinde 5 aus Kunststoff ohne weitere Nachbearbeitung hergestellt.

Die Freigabe- und Aufziehmechanik ist um eine Trägerplatte 7 und um eine zentrale Achse 8 angeordnet. Auf dieser Achse 8 wird die Seilspule 9, das Scheibenelement 10 sowie das Betätigungselement 11 gelagert und von einer Achsmutter 12 axial fixiert. Der Freigabevorgang wird über das Freigabeelement 13 in Form eines Schwenkhebels eingeleitet. Das federvorgespannte Freigabeelement 13 schwenkt bei Betätigung um die Schwenkhebelachse 14 in Richtung der zentralen Achse 8, dabei wird das ebenfalls federvorgespannte Schiebeelement 15 mit der Halteklinke 16 und der gegenüberliegenden Sperrklinke 17 aus den Eingriffsbereich des entsprechenden Zahnsegmentes am Scheibenelement 10 heraus bewegt. Am Scheibenelement 10 befinden sich drei Zahnsegmente. In die zwei am Umfang gegenüberliegenden Zahnsegmente greift wechselweise die Halteklinke 16 oder die Sperrklinke 17 ein. Das dritte Zahnsegment befindet sich innerhalb des Umfanges bzw. innerhalb der außen liegenden Zahnsegmente und dient während des Aufziehvorganges der Aufziehklinke 18 als Eingriffsverzahnung. Das Scheibenelement 10 ist drehfest mit der Seilspule 9 verbunden und wird ebenfalls durch die stets anstehende Schaltzugspannung und durch die Seilspulenfeder 19 in Abwickelrichtung vorgespannt. Der Aufziehvorgang wird über das Betätigungselement 11 in Form eines Drehhebels eingeleitet. Der Betätigungshebel 11 wird von der Drehhebelfeder 20 in der Ausgangsstellung gehalten. Die federvorgespannte Aufziehklinke 18 schwenkt um die Klinkenachse 21, die parallel zur zentralen Achse 8 verläuft und auf der einen Seite im Betätigungselement 11 und auf der anderen Seite in einer Zwischenplatte 22 gelagert ist. Die Außenkontur der Zwischenplatte 22 ist so gestaltet, dass sie verdrehfest in die entsprechende Gegenkontur am Betätigungselement 11 eingelegt werden kann. An der Aufziehklinke 18 befindet sich der Lagerbereich mit der angeformten Klinkenachse 21 und der Eingriffsbereich mit der Klinkenkontur. Beide Bereiche sind in Richtung der Klinken- bzw. Schwenkachse räumlich versetzt, damit nur mit der relativ schlanken Klinkenkontur durch die feststehende Trägerplatte 7 hindurch in das innenliegende Aufziehzahnsegment gegriffen werden muß. Die Aufziehklinke 18 reicht mit seinem Eingriffsbereich durch die Trägerplatte 7 hindurch und klinkt bei Betätigung zum Aufziehen der Seilspule in die Zahnkontur des innenliegenden Zahnsegmentes am Scheibenelement 10 ein.

Dieses Klinkenkonzept mit räumlich versetztem Lager- und Eingriffsbereich ist nicht nur wie in der gezeigten Lösung für Triggerschalter geeignet, es kann generell in Schaltern mit einem Aufzieh- und Freigabemechanismus eingesetzt werden.

Dieser Schalter ist mit einer gut plazierten Ganganzeige ausgestattet. Die aktuelle Gangstellung wird von einem mit Transportzähnen 23 versehenen elastischen Anzeigeband 24 von der Seilspule 9, entlang einer Aussparung 25 in den Sichtbereich des Fahrers übertragen. Die Aussparung 25 und damit auch das Anzeigeband 24 wird von einer im Sichtbereich des Fahrers durchsichtigen Abdeckung 26 gegen Umwelteinflüsse geschützt. Zur besseren Erkennung der Ganganzeige ist die durchsichtige Abdeckung 26 im Sichtbereich des Fahrers als Vergrößerungslinse ausgebildet.

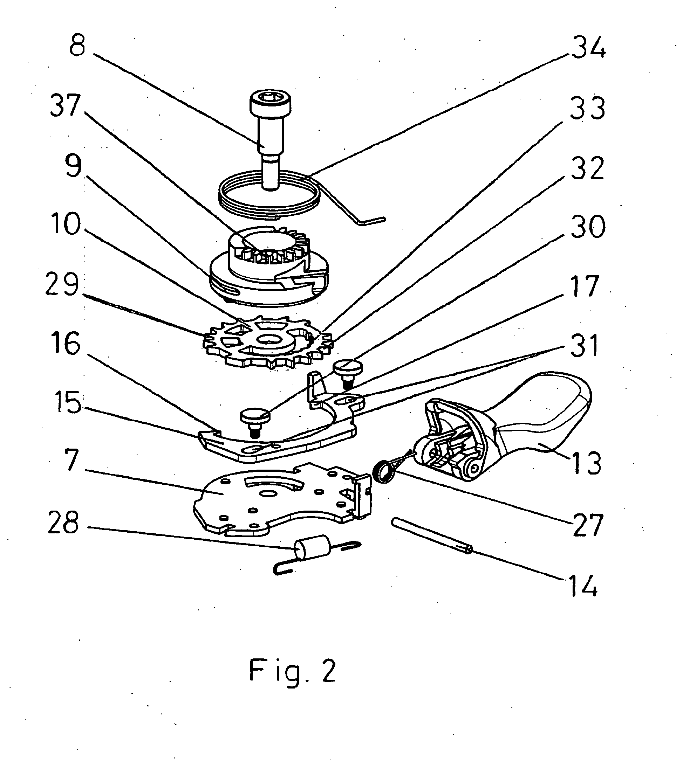

Figur 2 zeigt die Freigabemechanik mit dem als Schwenkhebel ausgebildeten Freigabeelement 13, das um die Schwenkhebelachse 14 in Richtung der zentralen Achse 8 betätigt wird. Die Freigabefeder 27 bringt den Schwenkhebel nach erfolgtem Freigabevorgang wieder in die Ausgangsstellung zurück. Außerhalb der Schaltphase zieht die Haltefeder 28 das Schiebeelement 15 gegen das Scheibenelement 10, wo die Halteklinke 16 in die Zahnkontur des Haltezahnsegmentes 29 eingreift und eine Drehbewegung des Scheibenelementes 10 bzw. der Seilspule 9 in Abwickelrichtung verhindert. Das Schiebeelement 15 wird an zwei Führungsnieten 30 geführt. Diese reichen durch zwei Langlöcher 31 hindurch und sind an der Trägerplatte 7 befestigt.

Gegenüber der Halteklinke16 befindet sich die Sperrklinke 17, die während des Freigabevorganges in die Zahnkontur des Sperrzahnsegmentes 32 am Umfang des Scheibenelementes 10 einklinkt und somit nur eine definierte Freigabebewegung der Seilspule 9 zuläßt. Innerhalb des Scheibenelementes 10 befindet sich ein Durchbruch für das Aufziehzahnsegment 33. Das Scheibenelement 10 ist drehfest mit der von einer Seilspulenfeder 34 in Abwickelrichtung vorgespannten Seilspule 9 verbunden. Die Seilspule 9 ist mit einem Zahnkranz 37, zur formschlüssigen Weitergabe der aktuellen Seilspulenstellung an die Ganganzeige, ausgestattet.

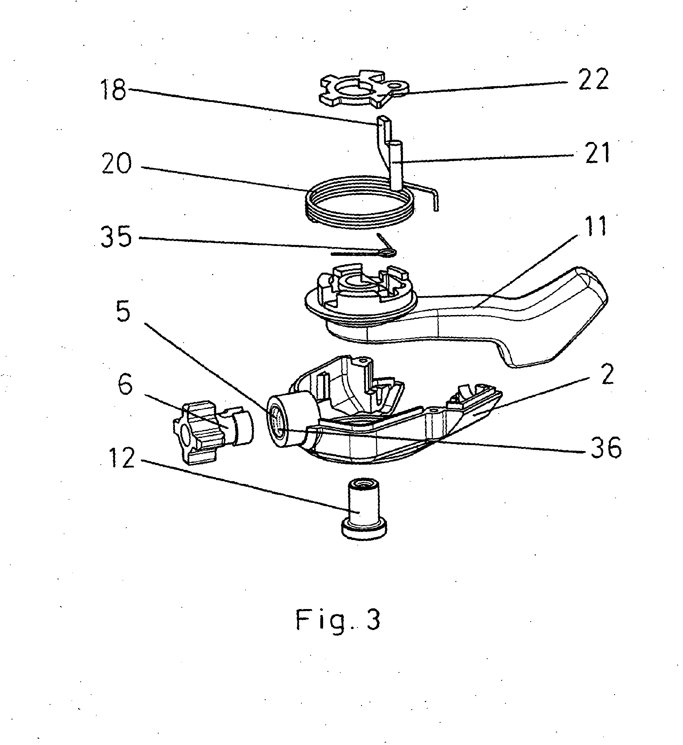

Figur 3 zeigt das Verkleidungselement 2 und die Aufziehmechanik mit dem als Drehhebel gestalteten Betätigungselement 11, der um eine zentrale Achse schwenkt und mit einer Achsmutter 12 axial gesichert wird. Das Betätigungselement 11 wird von der Drehhebelfeder 20 in der Ausgangslage gehalten. Die Aufziehklinke 18 und die Klinkenfeder 35 werden vom Betätigungselement 11 getragen. Dabei nimmt das Betätigungselement 11 eine Seite der Klinkenachse 21 auf, während die andere Seite in der Zwischenplatte 22 gelagert ist. Die Hebelverhältnisse am Lagerbereich der Aufziehklinke 18 bzw. der Klinkenachse 21 sind so gewählt, daß die Lagerstelle in der Zwischenplatte 22 den weitaus größten Anteil der Abstützkräfte aufnimmt. Die Zwischenplatte 22 hat im mittleren Bereich einen Durchbruch für die Aufziehklinke 18 und ist drehfest mit dem Betätigungselement 11 verbunden.

Beim Aufziehvorgang wird das Betätigungselement 11 mit der Aufziehklinke 18 in Aufziehrichtung bewegt, dabei greift der Eingriffsbereich der Aufziehklinke 18 in die Zahnkontur des Aufziehzahnsegmentes ein und dreht das Scheibenelement bzw. die Seilspule in die nächste Gangstufe. Der Lager- und der Eingriffsbereich sind in Richtung der Klinkenachse 21 bzw. der Schwenkachse der Aufziehklinke 18 räumlich versetzt, so dass der Durchbruch in der Zwischenplatte 22 und der Trägerplatte nur für den schwenkenden Eingriffsbereich dimensioniert werden muß.

Es können beim Aufziehvorgang mit einer Schaltbewegung auch mehrere Gangstufen weitergeschaltet werden. Während der Aufziehbewegung ratscht die Halteklinke über das Haltezahnsegment am Scheibenelement, um nach diesem Schaltvorgang wieder die aktuelle Gangstellung gegen die Schaltzugspannung zu fixieren. Das Verkleidungselement 2 ist ein Kunststoffbauteil und umschließt zusammen mit dem Schaltergehäuse die Schaltermechanik. Seitlich am Verkleidungselement 2 ist die mit einem Innengewinde 5 ausgestattete Aufnahme 36 für die Einstellschraube 6 angeordnet. Das komplette Verkleidungselement 2 wird inklusive Aufnahme 36 mit Innengewinde 5 in einem Fertigungsgang hergestellt und mit dem Schaltergehäuse verschraubt.

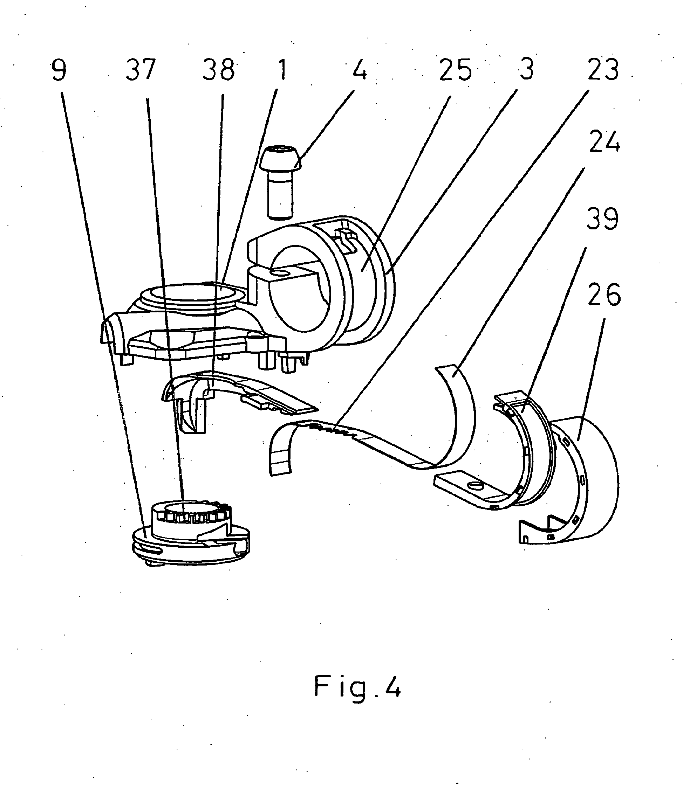

Figur 4 zeigt das Schaltergehäuse 1 mit integrierter Lenkerklemme 3 und die Komponenten der Ganganzeige mit dem Anzeigeband 24. Die Lenkerklemme 3 bildet mit dem Schaltergehäuse 1 ein gemeinsames Bauteil und wird mit der Klemmschraube 4 am Lenker befestigt. Am elastischen Anzeigeband 24 sind seitlich Transportzähne 23 vorgesehen, die in einen entsprechenden Zahnkranz 37 an der Seilspule 9 eingreifen. Beim Verdrehen der Seilspule 9 wird somit die aktuelle Gangstellung über die Verzahnung am Anzeigeband 24 und an der Seilspule 9 in den Sichtbereich des Fahrers übertragen und dort angezeigt. Das Anzeigeband 24 wird dabei in einer Aussparung 25 in der Lenkerklemme 3 um den Lenker herum in einen günstigen Anzeigebereich geleitet. Das Anzeigeband 24 wird im Bereich der Transportzähne 23 von einem Gegenhalter 38 geführt und auf der Lenkerseite von einer Innenführung 39 sowie auf der Außenseite von einer Abdeckung 26 geleitet und dabei um mehr als 90° um den Lenker herum gelenkt. Die Abdeckung 26 ist im Sichtbereich des Fahrers durchsichtig und zur besseren Anzeigeerkennung als Linse bzw. Vergrößerungsglas ausgebildet.

### Bezugszeichenliste

- 1: Schaltergehäuse
- 2: Verkleidungselement
- 3: Lenkerklemme
- 4: Klemmschraube
- 5: Gewinde
- 6: Einstellschraube
- 7: Trägerplatte
- 8: Achse
- 9: Seilspule
- 10: Scheibenelement
- 11: Betätigungselement
- 12: Achsmutter
- 13: Freigabeelement
- 14: Schwenkhebelachse
- 15: Schiebeelement
- 16: Halteklinke
- 17: Sperrklinke
- 18: Aufziehklinke
- 19: Seilspulenfeder
- 20: Drehhebelfeder
- 21: Klinkenachse
- 22: Zwischenplatte
- 23: Transportzähne
- 24: Anzeigeband
- 25: Aussparung
- 26: Abdeckung
- 27: Freigabefeder
- 28: Haltefeder
- 29: Haltezahnsegment
- 30: Führungsniet
- 31: Langloch
- 32: Sperrzahnsegment
- 33: Aufziehzahnsegment
- 34: Seilspulenfeder
- 35: Klinkenfeder
- 36: Aufnahme
- 37: Zahnkranz
- 38: Gegenhalter
- 39: Innenführung

## Patentansprüche

1. Schalter mit einer Aufzieh-, Halte- und Freigabemechanik bestehend aus:
- einem Schaltergehäuse **1** vorzugsweise mit einer Lenkerbefestigung
- einer Seilspule **9**
- einer Aufziehmechanik, mit einem Zahnsegment, einer Aufziehklinke **18** und einem Betätigungselement **11**
- einer Freigabemechanik
wobei die Freigabemechanik mit zwei Zahnsegmenten, zwei Klinken zum Halten und schrittweisen Freigeben des Schaltzuges und einem Freigabeelement **13** ausgestattet ist und **dadurch gekennzeichnet, dass** die Zahnsegmente zum Aufziehen, Halten und Freigeben des Schaftzuges auf einem Scheibenelement **10** angeordnet sind; und dass
die Zahnsegmente koaxial auf dem Scheibenelement 10 angeordnet sind, wobei sich mindestens ein Zahnsegment an der Außenkontur und ein Zahnsegment innerhalb des Scheibenumfanges befindet.

2. Schalter nach Anspruch 1,
**dadurch gekennzeichnet, dass** sich das innerhalb des Scheibenumfanges angeordnete Zahnsegment in einem Scheibendurchbruch befindet und vorzugsweise mit einer Innenverzahnung ausgestattet ist.

3. Schalter nach den Ansprüchen 1 bis oder 2,
**dadurch gekennzeichnet, dass** die Zahnsegmente der Freigabemechanik am Umfang vorzugsweise gegenüberliegend angeordnet sind und sich das Aufziehzahnsegment **33** der Aufziehmechanik innerhalb des Scheibenelementes **10** befindet.

4. Schalter nach den Ansprüchen 1 oder 2,
**dadurch gekennzeichnet, dass** das Aufziehzahnsegment **33** und das Haltezahnsegment **29** der Freigabemechanik gegenüberliegend am Umfang des Scheibenelementes **10** angeordnet sind und sich das Sperrzahnsegment **32** innerhalb des Scheibenelementes **10** befindet.

5. Schalter nach den Ansprüchen 1 oder 2,
**dadurch gekennzeichnet, dass** das Aufziehzahnsegment **33** und das Sperrzahnsegment **32** der Freigabemechanik gegenüberliegend am Umfang des Scheibenelementes **10** angeordnet sind und sich das Haltezahnsegment **29** innerhalb des Scheibenelemetes **10** befindet.

6. Schalter nach dem Anspruch 1,
**dadurch gekennzeichnet, dass** das mit Zahnsegmenten bestückte Scheibenelement **10** drehfest mit der Seilspule **9** verbunden ist und mit dem Betätigungselement **11** um eine zentrale Achse **8** im Schaltergehäuse **1** angeordnet ist.

7. Schalter nach Anspruch 6,
**dadurch gekennzeichnet, dass** die Seilspule **9** mit einem Zahnkranz **37** ausgestattet ist, in den die Transportzähne **23** des linear verschiebbaren elastischen Anzeigebandes **24** eingreifen.

8. Schalter nach Anspruch 6,
**dadurch gekennzeichnet, dass** das Anzeigeband **24** in der, im Schaltergehäuse **1** integrierten Lenkerklemme **3** umgelenkt und geführt wird.

9. Schalter nach den Ansprüchen 6 oder 7,
**dadurch gekennzeichnet, dass** das Anzeigeband **24** in der Lenkerklemme **3** um mehr als 90° umgelenkt und von einer durchsichtigen, vorzugsweise optisch vergrößernden Abdeckung **26** geführt wird.

10. Schalter nach Anspruch 1,
**dadurch gekennzeichnet, dass** die Freigabemechanik auf einer Trägerplatte **7** montiert ist und die Aufziehmechanik unterhalb der Trägerplatte angeordnet ist, wobei die Aufziehklinke **18** zum Eingriff in das Aufziehzahnsegment **33** am Scheibenelement **10** durch die Trägerplatte **7** hindurch greift.

11. Schalter nach Anspruch 1,
**dadurch gekennzeichnet, dass** die Schaltmechanik im wesentlichen von der Trägerplatte **7** getragen und vom Schaltergehäuse **1** mit integrierter Lenkerklemme **3** sowie von einem Verkleidungselement **2** abgedeckt wird, wobei sich die Aufnahme **36** für das Seilzugeinstellelement, vorzugsweise eine Einstellschraube **6,** am Verkleidungselement **2** befindet.

12. Schalter nach Anspruch 1,
**dadurch gekennzeichnet, dass** die Aufziehmechanik im wesentlichen aus einem Aufziehzahnsegment **33,** einer Aufziehklinke **18** und einem Betätigungselement **11** besteht, wobei der Lagerbereich und der Eingriffsbereich der Aufziehklinke **18** in Richtung der Klinkenachse **21** bzw. Schwenkachse räumlich versetzt angeordnet sind.

13. Schalter nach Anspruch 12,
**dadurch gekennzeichnet, dass** die Aufziehklinke **18** aus einer Klinke und einer Klinkenachse **21** besteht und beide ein gemeinsames Bauteil bilden.

14. Schalter nach Anspruch 12,
**dadurch gekennzeichnet, dass** sich die Klinkenachse **21** der Aufziehklinke **18** zum einen im Betätigungselement **11** selbst und zum anderen an einer mit dem Betätigungselement **11** verbundenen Zwischenplatte **22** abstützt.

15. Schalter nach Anspruch 1
**dadurch gekennzeichnet, dass** die Aufziehmechanik im wesentlichen aus einem Aufziehzahnsegment **33,** einer Aufziehklinke **18** und einem Betätigungselement **11** besteht, wobei sich der Lagerbereich und der Eingriffsbereich der Aufziehklinke **18** gegenüberliegen und die Schwenkachse der Aufziehklinke **18** nicht parallel zur Achse **8** der Seilspule **9,** sondern vorzugsweise senkrecht dazu verläuft.

16. Schalter nach den Ansprüchen 12 oder 15,
**dadurch gekennzeichnet, dass** die Aufziehklinke **18** über keine ausgeprägte Klinkenachse oder ausgebildetes Gelenk verfügt, sondern dass die Aufziehklinke **18** um eine Klinkenkante schwenken kann und sich dabei in einer entsprechenden Gegenkontur am Betätigungselement **11** abstützt.

## Claims

1. Switch having a wind-up, holding and release mechanism, consisting of:
- a switch housing **1,** preferably having a handlebar fastening
- a cable reel **9**
- a wind-up mechanism, having a toothed segment, a wind-up pawl **18** and an actuating element **11**
- a release mechanism,
wherein the release mechanism is equipped with two toothed segments, two pawls for the holding and step-by-step release of the gearshift cable, and a release element **13,**
**characterized in that** the toothed segments for the wind-up, holding and release of the gearshift cable are disposed on a disc element **10;** and **in that** the toothed segments are arranged coaxially on the disc element **10,** at least one toothed segment being located on the outer contour and one toothed segment within the disc periphery.

2. Switch according to Claim 1, **characterized in that** the toothed segment disposed within the disc periphery is located in a disc aperture and is preferably equipped with an inner toothing.

3. Switch according to Claims 1 or 2, **characterized in that** the toothed segments of the release mechanism are disposed on the periphery, preferably one opposite the other, and the wind-up toothed segment **33** of the wind-up mechanism is located within the disc element **10.**

4. Switch according to Claims 1 or 2, **characterized in that** the wind-up toothed segment **33** and the holding toothed segment **29** of the release mechanism are disposed one opposite the other on the periphery of the disc element **10** and the locking toothed segment **32** is located within the disc element **10.**

5. Switch according to Claims 1 or 2, **characterized in that** the wind-up toothed segment **33** and the locking toothed segment **32** of the release mechanism are disposed one opposite the other on the periphery of the disc element **10** and the holding toothed segment **29** is located within the disc element **10.**

6. Switch according to Claim 1, **characterized in that** the disc element **10** armed with toothed segments is connected in a rotationally secure manner to the cable reel **9** and is arranged with the actuating element **11** around a central shaft **8** in the switch housing **1.**

7. Switch according to Claim 6, **characterized in that** the cable reel **9** is equipped with a toothed rim **37,** in which the transport teeth **23** of the linearly displaceable, elastic display band **24** engage.

8. Switch according to Claim 6, **characterized in that** the display band **24** is deflected and guided in the handlebar clamp **3** integrated in the switch housing **1.**

9. Switch according to Claims 6 or 7, **characterized in that** the display band **24** is deflected in the handlebar clamp **3** by more than 90° and is guided by a transparent, preferably optically magnifying cover **26.**

10. Switch according to Claim 1, **characterized in that** the release mechanism is mounted on a mounting plate **7** and the wind-up mechanism is disposed beneath the mounting plate, the wind-up pawl **18** reaching through the mounting plate **7** for engagement in the wind-up toothed segment **33** on the disc element **10.**

11. Switch according to Claim 1, **characterized in that** the gearshift mechanism is substantially borne by the mounting plate **7** and is covered by the switch housing **1** with integrated handlebar clamp **3,** as well as by a cladding element **2,** the receiving fixture **36** for the cable adjusting element, preferably an adjusting screw **6,** being located on the cladding element **2.**

12. Switch according to Claim 1, **characterized in that** the wind-up mechanism substantially consists of a wind-up toothed segment **33,** a wind-up pawl **18** and an actuating element **11,** the bearing region and the engagement region of the wind-up pawl **18** being arranged spatially offset in the direction of the pawl shaft **21** or pivot axis.

13. Switch according to Claim 12, **characterized in that** the wind-up pawl **18** consists of a pawl and a pawl shaft **21** and both form a common component part.

14. Switch according to Claim 12, **characterized in that** the pawl shaft **21** of the wind-up pawl **18** is supported, on the one hand, in the actuating element **11** itself and, on the other hand, against an intermediate plate **22** connected to the actuating element **11.**

15. Switch according to Claim 1, **characterized in that** the wind-up mechanism substantially consists of a wind-up toothed segment **33,** a wind-up pawl **18** and an actuating element **11,** the bearing region and the engagement region of the wind-up pawl **18** lying one opposite the other, and the pivot axis of the wind-up pawl **18** not running parallel to the shaft **8** of the cable reel **9,** but preferably perpendicularly thereto.

16. Switch according to Claims 12 or 15, **characterized in that** the wind-up pawl **18** has no pronounced pawl shaft or configured joint, but rather the wind-up pawl **18** can pivot about a pawl edge and is here supported in a corresponding opposite contour on the actuating element **11.**

## Revendications

1. Commutateur comprenant un mécanisme de montage, de retenue et de libération, constitué des éléments suivants :
- un boîtier de commutateur 1, de préférence comprenant une fixation de bras oscillant,
- une bobine pour câble 9,
- un mécanisme de montage, avec un segment denté, un cliquet de montage 18 et un élément d'actionnement 11,
- un mécanisme de libération,
le mécanisme de libération étant muni de deux segments dentés, de deux cliquets pour retenir et libérer pas à pas le câble du commutateur et d'un élément de libération 13 et **caractérisé en ce que** les segments dentés pour le montage, la fixation et la libération du câble du commutateur sont disposés sur un élément de disque 10 ; et **en ce que** les segments dentés sont disposés coaxialement sur l'élément de disque 10, au moins un segment denté se trouvant sur le contour extérieur et un segment denté se trouvant à l'intérieur de la périphérie du disque.

2. Commutateur selon la revendication 1,
**caractérisé en ce que** le segment denté disposé à l'intérieur de la périphérie du disque se trouve dans un orifice du disque et est de préférence muni d'une denture intérieure.

3. Commutateur selon la revendication 1 ou 2,
**caractérisé en ce que** les segments dentés du mécanisme de libération sont disposés sur la périphérie de préférence en regard l'un de l'autre, et le segment denté de montage 33 du mécanisme de montage se trouve à l'intérieur de l'élément de disque 10.

4. Commutateur selon la revendication 1 ou 2,
**caractérisé en ce que** le segment denté de montage 33 et le segment denté de retenue 29 du mécanisme de libération sont disposés en regard l'un de l'autre sur la périphérie de l'élément de disque 10 et le segment denté de verrouillage 32 se trouve à l'intérieur de l'élément de disque 10.

5. Commutateur selon la revendication 1 ou 2,
**caractérisé en ce que** le segment denté de montage 33 et le segment denté de verrouillage 32 du mécanisme de libération sont disposés en regard l'un de l'autre sur la périphérie de l'élément de disque 10 et le segment denté de retenue 29 se trouve à l'intérieur de l'élément de disque 10.

6. Commutateur selon la revendication 1,
**caractérisé en ce que** l'élément de disque 10 muni des segments dentés est connecté de manière solidaire en rotation à la bobine pour câble 9, et est disposé avec l'élément d'actionnement 11 autour d'un axe central 8 dans le boîtier du commutateur 1.

7. Commutateur selon la revendication 6,
**caractérisé en ce que** la bobine pour câble 9 est pourvue d'une couronne dentée 37 dans laquelle viennent en prise les dents de transport 23 du bandeau indicateur élastique 24 déplaçable linéairement.

8. Commutateur selon la revendication 6,
**caractérisé en ce que** le bandeau indicateur 24 est dévié et guidé dans la pince de bras oscillant 3 intégrée dans le boîtier du commutateur 1.

9. Commutateur selon la revendication 6 ou 7,
**caractérisé en ce que** le bandeau indicateur 24 est dévié de plus de 90° dans la pince de bras oscillant 3 et est guidé par un recouvrement 26 transparent, de préférence à grossissement optique.

10. Commutateur selon la revendication 1,
**caractérisé en ce que** le mécanisme de libération est monté sur une plaque porteuse 7 et le mécanisme de montage est disposé sous la plaque porteuse, le cliquet de montage 18 venant en prise dans le segment denté de montage 33 sur l'élément de disque 10 à travers la plaque porteuse 7.

11. Commutateur selon la revendication 1,
**caractérisé en ce que** le mécanisme de commutation est porté essentiellement par la plaque porteuse 7 et est recouvert par le boîtier du commutateur 1 avec la pince de bras oscillant 3 intégrée ainsi que par un élément d'habillage 2, le logement 36 pour l'élément d'ajustement du câble Bowden, de préférence une vis de réglage 6, se trouve sur l'élément d'habillage 2.

12. Commutateur selon la revendication 1,
**caractérisé en ce que** le mécanisme de montage se compose essentiellement d'un segment denté de montage 33, d'un cliquet de montage 18 et d'un élément d'actionnement 11, la région de palier et la région d'engagement du cliquet de montage 18 étant disposées de manière décalée spatialement dans la direction de l'axe de cliquet 21 ou de l'axe de pivotement.

13. Commutateur selon la revendication 12,
**caractérisé en ce que** le cliquet de montage 18 se compose d'un cliquet et d'un axe de cliquet 21 et les deux forment un composant commun.

14. Commutateur selon la revendication 12,
**caractérisé en ce que** l'axe de cliquet 21 du cliquet de montage 18 s'appuie d'une part dans l'élément d'actionnement 11 lui-même et d'autre part contre une plaque intermédiaire 22 connectée à l'élément d'actionnement 11.

15. Commutateur selon la revendication 1,
**caractérisé en ce que** le mécanisme de montage se compose essentiellement d'un segment denté de montage 33, d'un cliquet de montage 18 et d'un élément d'actionnement 11, la région de palier et la région d'engagement du cliquet de montage 18 étant opposées et l'axe de pivotement du cliquet de montage 18 ne s'étendant pas parallèlement à l'axe 8 de la bobine pour câble 9, mais de préférence perpendiculairement à celui-ci.

16. Commutateur selon la revendication 12 ou 15,
**caractérisé en ce que** le cliquet de montage 18 ne dispose d'aucun axe de cliquet marqué ou d'articulation formée, mais **en ce que** le cliquet de montage 18 peut pivoter autour d'une arête du cliquet et s'appuie ainsi dans un contour conjugué correspond sur l'élément d'actionnement 11.
